# EUROPEAN PATENT APPLICATION

(11) **EP 1 121 851 A2**
(43) Date of publication of application: **08.08.2001**
(21) Application number: 01850019.9
(22) Date of filing: 29.01.2001
(51) Int. Cl.: A01G 23/00

(54) **Bundling device**

(30) Priority: 31.01.2000 SE 0000288
(71) Applicant: Örjes, Ake, 781 95 Borlänge (SE)
(72) Inventor: Örjes, Ake, 781 95 Borlänge (SE)
(74) Representative: Lindgren, Anders

(57) **Abstract**

In connection with early forestry, thin vegetation is cut to give space for the trees that in the future are to be valuable timber. The trees that are cut, are so called low grade timber, which are thin and have many branches and twigs, whereby they are difficult to transport. Although they represent a high-energy source, they are not taken care of today. Present invention primary refers to a complement for known grapple loaders used in forestry, such that a bundle, of e.g. low grade timber, which is held together and compressed by a grapple (10), may be provided with an embracing bundle-band (4), which after the grapple has released the bundle keeps it together. Due to the invention, biomass cut in connection with forestry actions may be converted from straggly and "hard to handle" material into "easy to handle" bundles, and on economically acceptable terms be used for production of heat and electricity. The invention may further be utilized to bundle other elongated materials, e.g. in connection with storage and transport handling.

## Description

### Technical field

The present invention relates to a method and a device for bundling of low grade timber and similar elongate objects, and more specifically to such a device to be used in connection with a mobile grapple, e.g. a grapple loader

### Prior art

Forests are one of nature's most valuable resources and their exploitation is of crucial economical importance for our country. To reach highest possible production volume in forests, while trying to obtain sawtimber of highest conceivable quality, keeping this in mind it is necessary to take care of the planted stands already from the beginning.

At present, forestry is neglected, and especially clearing and first thinning. This is primary due to the high costs and the lack of suitable technical equipment. To clear and leaving the young trees in the stands, only results in high costs and is a waste of valuable energy. The value of these actions is of long-term, and does not generate a positive economic result until a second thinning about 20 - 50 years later. Not until the final cutting, which may be done up to 100 years after the first actions depending on what part of the country the forest is situated in, the highest profit is obtained from early forestry actions.

In connection with these actions thin vegetation such as young trees, bushes and the like, known as low grade timber, is cut to make room for the trees that one wants to grow until the next harvest. Timber of this kind is straggly due to protruding branches, whereby it takes up a great deal of space and is thus difficult to transport. The amount of timber that may be exploited in connection with these forestry actions is by volume limited to about 50 m3f biomass per hectares (appr. 20 m3/acres) at good conditions, and it consists of thin stemmed trees with a diameter from a few cm up to about 12 cm. The average area of objects taken care of in private forestry is about 2 hectares.

To be able to take care of the cut biomass, different techniques have been developed. Most commonly used is the chipping method. This method requires short transports in the terrain, using specialized vehicles together with a well structured transport organization based on a container system, whereby the method in reality is expensive.

Timber bundling techniques are known. Among these the "long-bundler", developed during the 80's, Swedish Pat.'s No. SE 8601316 and SE 458355, may be mentioned. Other known systems based on similar principles are: "Fiberpack" by Fiberpac AB, Vittaryd, Sweden, and "Woodpac" by World Wood Pac, Sävsjö, Sweden. Both these are built as large specialized machines and require large access of raw material. The produced bundles/packets are of relatively large dimensions, and therefore large terrain vehicles must be utilized for the transport to a road, from where they are transported on timber-trucks to a stationary process station or where they are converted into chips.

Moreover, it is known to form elongate compressed bundles when harvesting energy forest, which bundles are then transported to a chipping center. However, this method is not applicable when clearing or thinning a forest as it requires, among other things, an essentially continuos supply of material. One example of a machine of this type is the "Bundler" by Salixmaskiner AB, Sweden.

The offered techniques are large scale and are normally performed on a contractual basis. These alternatives are usually not, from an economical point of view, interesting to self-acting forest-owners that perform the forestry actions on a smaller scale.

SE patent appl. no: 7512457-8 discloses a method and a device for bundling of timber, wherein the bundling equipment is integrated with the fork of a fork loader.

The drawback with this bundling fork is the limited ability to compress the material to be bundled.

Many of these forest-owners have access to terrain vehicles with conventional grapple loaders, e.g. "Mohedavagnen" and others. All these grapples principally have the same technical features, comprising two grabbing claws that are hinged such that they can move towards and away from each other. Such equipment makes it possible to gather and transport the cut timber, but a problem is that the trees cut in connection with forestry actions occupy a large space, due to attached twigs and branches, whereby the solid mass per load becomes low and non-profitable.

By bundling the low-grade timber, the solid timber volume is considerably raised during the transports of the material. Both the transports through terrain and on roads can be performed using conventional vehicles, which leads to substantially lower costs compared with the costs associated with the use of specialized vehicles, as when low-grade timber is taken care of and converted into chips today. If the bundling is performed without increased additional costs, the early forestry actions may have a positive economical value instead of being an immediate expense.

### Summary of the invention

Thus, one object of the present invention is to address the above problem by providing means and methods that make possible a profitable harvest of biomass in connection with forestry actions also when the supply may be restricted.

Another object of the invention is to facilitate the handling of elongate objects by bundling them into bundles in connection with loading and unloading.

These and other objects are met by the bundling device at a mobile grapple (10) as defined in claim 1 and the method of bundling as defined in claim 9. Embodiments of the invention are defined in the dependent claims.

### Short description of the drawings

Below, the invention is described more in detail in connection with the accompanying, diagrammatic drawings wherein:
- Fig. 1: is a schematic side view of a bundling device according to the invention,
- Fig. 2: is a perspective view showing the bundling device according to fig. 1 arranged on a conventional grapple,
- Fig. 3: is a cross-sectional view along the plane IV - IV in fig. 1, showing one of the bundle-band guide-arms,
- Fig. 4: is a view similar to fig. 1, wherein the bundle-band guide-arms are shown in longitudinal section, and with the arms of the grapple in compressing state embracing a bundle.

### Detailed description of the invention

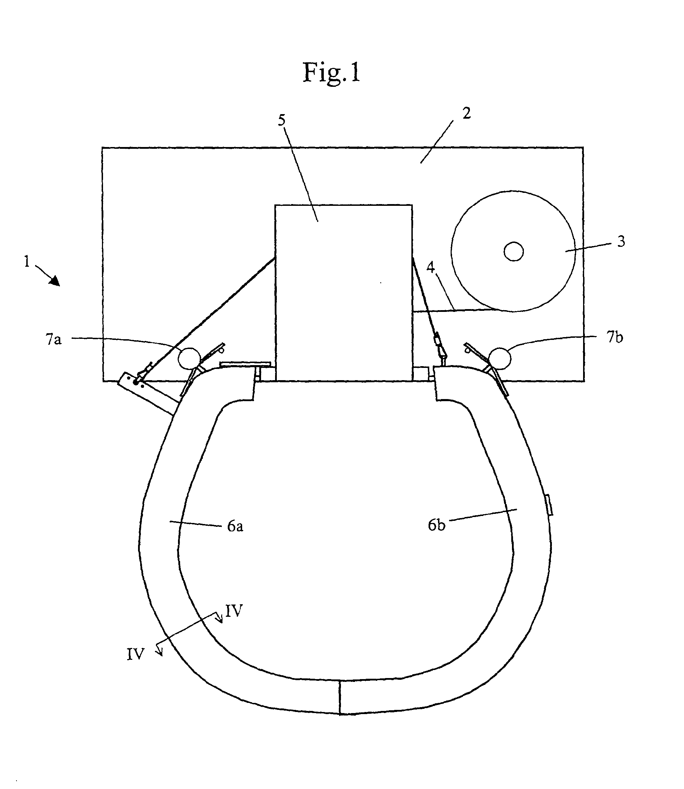

The bundling device 1 shown in fig. 1, comprises an assembly base 2, which on one side carries the bundling assembly and on the other is arranged to be attached to a grapple. The bundling assembly 1 comprises a bundle-band storage 3 for bundle-band 4, a drive- and joining device 5 for the bundle-band 4, and two guide arms 6a, 6b for the bundle-band 4. The guide arms 6a, 6b are pivotally carried by pivot pins 7a, 7b. As used herein, bundle-band 4 refers to a band, a string, a wire or the like. The guide arms 6a, 6b are basically C-shaped, as the arms of the grapple, and are of approximately the same size and pivotal like them. The drive- and joining device 5 comprises a feeder, a cutter, and a joiner, and if the bundle-band is a string or the like it also has to be adapted to this, e.g. by comprising a feed-shuttle for feeding the string. In the preferred embodiment, the bundling device 1 is electrically powered, but use of hydraulics, pneumatics or a combination of these may alternatively operate the bundling device 1.

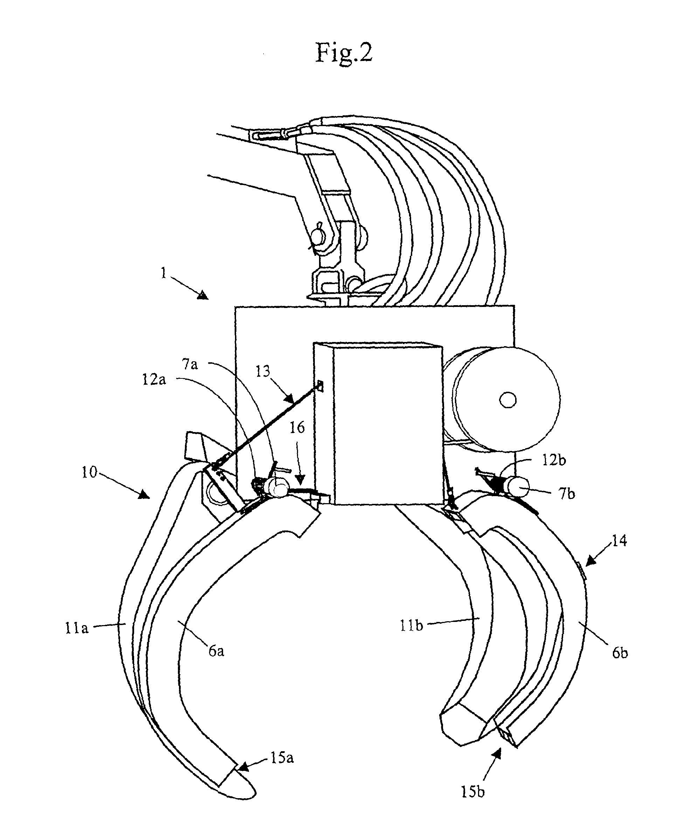

Fig. 2 show the bundling device 1 arranged on a conventional grapple 10, having grapple-arms 11a, 11b. The guide arms 6a, 6b are primarily activated in the closing direction by torsion springs 12a, 12b, which are supported on the pivot pins 7a, 7b for applying a biasing force to the guide arms, and secondly the guide arms are interconnected by a linkage 13 such that the guide arm 6b essentially follows the movements of the guide arm 6a, and thirdly the guide arms are prevented from closing more tightly, i.e. to a shorter radius, than the grapple-arms 1 la, 11b through the arrangement of a carrier 14 arranged on the guide arm 6b to engage one of the grapple arms 11b. Hence, the guide arms 6a, 6b perform a movement that is driven by the grapple-arms 11a, 11b in the opening direction, while they solely follows the grapple-arms 11a, 11b in the closing direction due to the biasing force applied from the springs 12a, 12b. The carrier 14 is arranged on the guide arm 6b in such a manner that it is moveable along the guide arm 6b, and adjustable concerning the distance between the guide arm 6b and the grapple-arm 11b of the grapple 10, such that the invention may be adapted for use together with grapples 10 of different models. The linkage 13 is formed such that one of the guide arms 6a, reaches a position where the guide arms 6a, 6b meet each other, at which position the subsequent movement of the guide arm 6a is interfered by a stopping device 16. As the guide arm 6a is stopped in the same position each time, the end sections 15a, 15 b of the guide arms 6a, 6b always meet each other at the same position. Alternatively, the guide arms 6a, 6b are stopped when the movement of one or both of the guide arms 6a, 6b is interfered by an intervening object, but as they solely are biased by the springs 12a, 12b in this direction, the guide arms 6a, 6b will not be damaged by such an event. The grapple-arms 11a, 11b may after the end sections 15a, 15b of the guide arms 6a, 6b have met each other, continue their contracting movement whereby the material that are to be bundled is compressed.

To avoid the grapple 10 from slanting due to the bundling device 1, a suitable counter weight may be arranged on the opposite side of the grapple. Suitably, this counter weight may be integrated with at quick mounting device for the bundling device 1.

If desired, the springs 12a, 12b may be replaced by another device which bias the guide arms 6a, 6b in the closing direction. Further, the guide arms may be provided with separate means for driving, such that they may be moved independent of the grapple-arms, however under the restriction that they only may be closed while the grapple is in a bundling position, i.e. when the grapple has gripped and compressed the material to be bundled. In the preferred embodiment the linkage 13 comprises a steel wire as the linking element, but alternatively it may be formed using a solid linkage system or a chain.

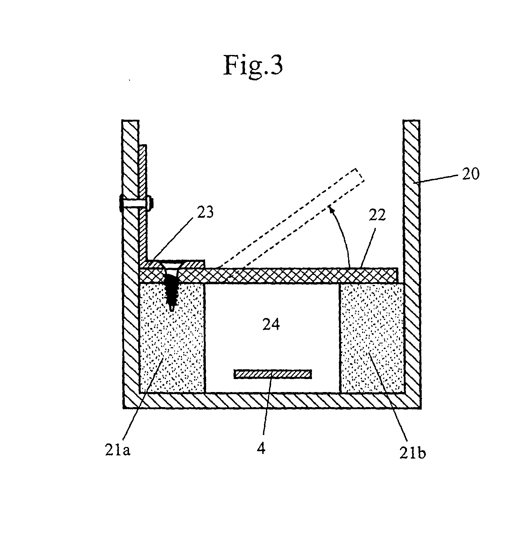

Fig. 3 shows the internal structure of the guide arms 6a, 6b, which comprises an essentially U-shaped housing 20, two spacer units 21a, 21b, a flexible tongue 22, and an fixating device 23 for fixating the flexible tongue 22 to the spacer unit 21a. This structure implies that an essentially closed guide channel 24 is formed for feeding of the bundle-band 4 in the guide arms 6a, 6b. The flexible tongue 22 permits the bundle-band 4 to leave the guide channel 24, and thereafter be tightened around the material to be bundled.

The spacer unit 21b may advantageously be formed of a flexible material, which makes it easier for the bundle-band 4 to leave the channel 24. Alternatively the flexible tongue 22 may be replaced by two tongues, whereby the second tongue is fixed to the second spacer unit 21b with a device corresponding to the fixating device 23.

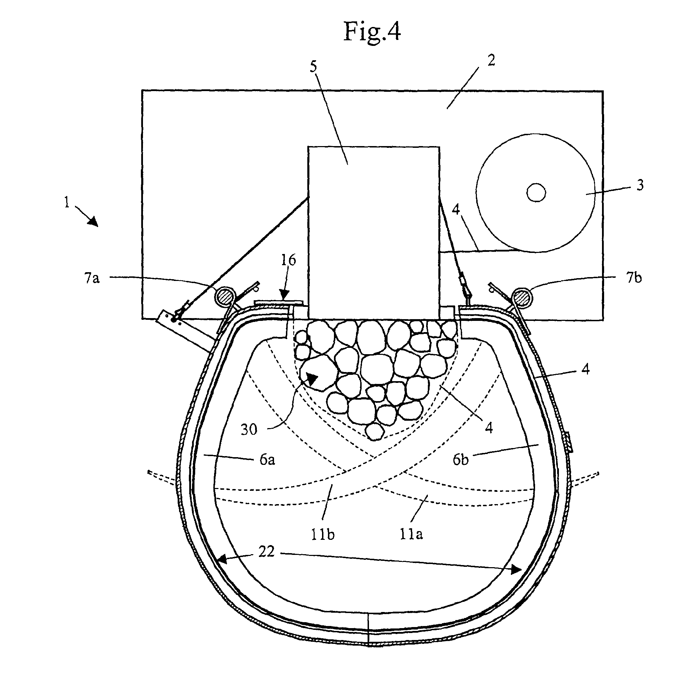

In fig. 4 the guide arms 6a, 6b are shown in the closed position, and it is shown how the grapple-arms 11a, 11b compresses a material 30 that are to be bundled. In this position the bundle-band 4 is feed through the closed loop formed by the guide channel 24 in the guide arms 6a, 6b, and eventually reach the drive- and joining device 5. When the free end of the bundle-band 4 has reached the drive- and joining device 5, it is fixated therein by the joiner. Thereafter, the bundle-band 4 is tightened around the material 30 to be bundled, by reversing the feed-direction of the feeder in the drive- and joining device 5, whereby the band 4 leaves the guide channel 24 and is tightened around the material 30. The free end of the bundle-band 4 is joined together with the bundle-band 4 by the joiner such that a loop is created, said loop embraces the material 30 and keeps the bundled material 30 together when the grapple-arms 11a, 11b release the grip around the material 30.

Preferably, the bundle-band 4 is formed of a tearproof combustible material, which permits thermal welding of the same without addition of extra material, such as a thermoplastic material or the like. But other materials, which may be joined in a satisfactory manner, are also useable.

To keep the bundled material 30 more tightly together, two or more bundle-bands 4 may be arranged at suitable distances along the bundle 30. This may either be done by performing two or more gripping actions including bundling, or by using an alternative embodiment comprising a grapple on which two or more separate bundling devices 1 have been mounted.

The size of the bundling device 1 may be adapted to the material that is to be bundled. Bundles, created with a device according to the invention, should have a peripheral diameter which is less than 50 cm, and preferably less than 30 cm, and a length of about 5 m. One reason why the smaller bundle diameter is preferred, is that the weight of the bundles is kept low, such that even small grapple loaders can be used for handling the bundles. Another reason is that small bundles result in better drying of the timber, and moisture ratios down to 25% may be achieved after drying for one summer season. The length of 5 meters is set to achieve full utilization of the timber trucks.

## Claims

1. Bundling device (1) at a mobile grapple (10) comprising a bundle-band storage (3), a feeder, a cutter, and a joiner, wherein the joiner is arranged to receive and fixate the free end of the bundle-band (4) and to join the bundle-band (4) together such that a closed loop is created around a bundle (30) which is kept together by the grapple (10)
**characterized in that**
a guide channel (24) is formed in additional guide arms (6a, 6b), which in closed position forms a closed path having an inner radius that is larger than the inner radius formed by the grapple-arms (11a, 11b) in a bundling position , and
that the feeder is arranged to feed the bundle-band (4) around the guide channel (24), and to tighten the bundle-band (4) around the bundle (30) when the free end of the bundle-band (4) has been fixed in the joiner.

2. Device according to claim 1 **characterized in that** the cross-section of the guide arms (6a, 6b) are essentially U-shaped, with the open side aimed towards the bundle (30).

3. Device according to claim 1 or 2 **characterized in that** at least one flexible tongue (22) is arranged in the U-shaped cross-section of the guide arms (6a, 6b), whereby an essentially closed guide channel (24) is formed for feeding of the bundle-band (4).

4. Device according to any of claims 1 to 3 **characterized in that** the guide arms (6a, 6b) are arranged to close solely when the grapple (10) is in a bundling position.

5. Device according to claim 4 **characterized in that** the guide arms (6a, 6b) are biased in the closing direction and that they are driven by the grapple (10) in the opening direction.

6. Device according to claim 4 **characterized in that** the guide arms (6a, 6b) are provided with separate means for driving, such that they may be moved independent of the grapple (10).

7. Device according to claim 5 or 6 **characterized in that** the guide arms (6a, 6b) are linked together such that both guide arms (6a, 6b) opens when one of them is moved in the opening direction.

8. Device according to any of the preceding claims **characterized in that** it is an auxiliary equipment, to be detachably mounted on a grapple (10).

9. Method of bundling a set of objects, using a bundling device (1) according to any of the claims 1 to 8 **characterized by** the steps:
moving the gapple-arms (11a, 11b) of the grapple (10) together around the objects to be bundled (30) such that these are compressed,
moving the guide arms (6a, 6b) together such that the guide channel (24) forms a closed loop embracing the bundle (30),
feeding bundle-band (4) through the guide channel (24) until the free end of the bundleband (4) reaches the joiner, where it is fixated,
tightening the bundle-band (4) around the bundle (30), and
joining and cutting the bundle-band (4) such that a loop is created that embraces and keep the bundle (30) together.
